# EUROPÄISCHE PATENTSCHRIFT

(11) **EP 0 483 463 B1**
(45) Veröffentlichungstag und Bekanntmachung des Hinweises auf die Patenterteilung: **26.04.1995**
(21) Anmeldenummer: 91112851.0
(22) Anmeldetag: 31.07.1991
(51) Int. Cl.: H04B 1/20, H04N 5/782, H03J 1/00, H04N 5/455, H03J 5/02

(54) **Vorrichtung zur Senderprogrammierung eines Satellitenempfängers**
Device for programming the channels of a satellite receiver
Dispositif de programmation des chaînes pour une réception par satellite

(30) Priorität: 30.10.1990 DE 4034493
(43) Veröffentlichungstag der Anmeldung: 06.05.1992
(73) Patentinhaber: Grundig E.M.V. Elektro-Mechanische Versuchsanstalt Max Grundig GmbH & Co. KG, 90762 Fürth (DE)
(72) Erfinder: Gröhlich, Klaus, Grundig E.M.V., Max Grundig, W-8510 Fürth (DE); Gwiosda, Horst, Grundig E.M.V., Max Grundig, W-8510 Fürth (DE); Oertel, Eberhard, Grundig E.M.V., Max Grundig, W-8510 Fürth (DE); Raabe, Siegfried, Grundig E.M.V., Max Grundig, W-8510 Fürth (DE); Siegel, Gerhard, Grundig E.M.V., Max Grundig, W-8510 Fürth (DE); Vagts, Heinz, Grundig E.M.V., Max Grundig, W-8510 Fürth (DE)

(56) Entgegenhaltungen:
- EP-A- 0 372 257
- DE-A- 3 337 204
- FUNKSCHAU Bd. 25, Nr. 18, August 1989, M NCHEN,DE Seiten 124 - 128 , XP53652SCHAAS 'Ein Ger t f r viele Standards'
- IEEE INTERNAT. CONFERENCE ON CONSUMER ELECTRONICS 1988 10. Juni 1988, ROSEMONT,IL,US Seiten 288 - 289 , XP94369 ZEISEL ET AL 'An Interactive Menu-driven
- Remote Control Unit for TV-receivers and VCR Recorders'

## Beschreibung

Die Erfindung betrifft eine Vorrichtung zur Senderprogrammierung eines Satellitenempfängers mit den im Oberbegriff des Anspruchs 1 angegebenen Merkmalen.

Ein derartiger Satellitenempfänger hat die Aufgabe, von der Außeneinheit einer Satellitenempfangsanlage zur Verfügung gestellte hochfrequente Satellitenfernsehsignale, die in einem Frequenzbereich von 950 bis 1750 MHz liegen, in eine Form umzwandeln, die jedes herkömmliche Fernsehgerät und jeder herkömmliche Videorecorder verarbeiten kann, beispielsweise in ein sogenanntes AV-Signal (Audio/Video), welches an einer Euro-AV-Buchse des Satellitenempfängers zur Verfügung gestellt wird, oder in ein im UHF-Bereich liegendes Signal, welches an einer Antennenbuchse des Satellitenempfängers ausgegeben wird. Weiterhin ist es auch möglich, den Satellitenempfänger in ein gemeinsames Gehäuse mit einem Fernsehempfänger oder einem Videorecorder einzubauen.

Da zum einen die Anzahl der Satelliten, die Fernsehprogramme abstrahlen, immer größer wird und zum anderen die Anzahl der Satellitenparameter, die notwendig sind, um die Satellitenempfangsanlage zum Empfang eines bestimmten Programmes einzustellen, ebenfalls groß ist, ist die Programmierung von Satellitenempfängern, die bisher im Handel erhältlich sind, sowohl zeitaufwendig, da sie unter Verwendung von gedruckten Tabellen mittels der Bedientastatur des Empfängers vorgenommen werden muß, als auch fehleranfällig, da die Anzahl der einzugebenden Parameter groß ist.

Der Erfindung liegt die Aufgabe zugrunde, einen Satellitenempfänger mit den im Oberbegriff des Anspruchs 1 angegebenen Merkmalen derart weiterzubilden, daß seine Senderprogrammierung für den Benutzer vereinfacht ist.

Diese Aufgabe wird bei einem Satellitenempfänger mit den im Oberbegriff des Anspruchs 1 angegebenen Merkmalen durch die im kennzeichnenden Teil des Anspruchs 1 angegebenen Merkmale gelöst. Vorteilhafte Ausgestaltungen ergeben sich aus den Unteransprüchen.

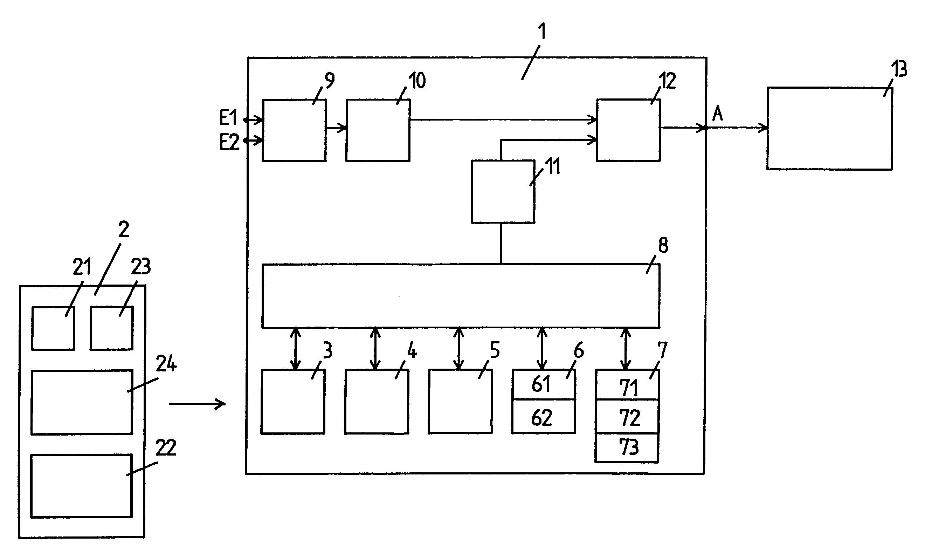

Die Vorteile der Erfindung bestehen insbesondere darin, daß die zur Senderprogrammierung eines Satellitenempfängers notwendigen Satellitenparameter nicht mühsam einer Fachzeitschrift oder einer Bedienungsanleitung entnommen werden müssen, sondern bereits werksseitig in einem Speicher des Satellitenempfänges abgespeichert werden und dem Benutzer bei der Empfängerprogrammierung zur Auswahl bzw. Übernahme in den Satellitensenderspeicher des Empfängers auf einem Bildschirm zur Verfügung gestellt werden. Weitere Vorteile der Erfindung ergeben sich aus der Erläuterung eines Ausführungsbeispiels anhand der Figur.

Diese zeigt ein Blockschaltbild eines Videorecorders 1, in dessen Gehäuse ein Satellitenempfänger integriert ist. Der gezeigte Videorecorder 1 weist im wesentlichen einen Fernbedienungsgeber 2, einen Fernbedienempfänger 3, einen Satellitensenderspeicher 4, einen Empfangsanlagendatenspeicher 5, einen Satellitenparameterspeicher 6, einen Benutzerführungsinformationsspeicher 7, einen Mikrocomputer 8, einen Satellitentuner 9, eine Videorecorderschaltung 10, welche die Schaltungselemente eines herkömmlichen Videorecorders wie Tuner, ZF-Teil usw., enthält, einen Textgenerator 11 und eine Eintastschaltung 12 auf.

Im folgenden wird beispielhaft erläutert, wie die Senderprogrammierung des Satellitenempfängers des gezeigten Videorecorders 1 erfolgt:

Durch Betätigung einer Informationstaste 21 auf dem Fernbedienungsgeber 2 wird dem Mikrocomputer 8 über den Fernbedienempfänger 3 mitgeteilt, daß eine erste Übersichtsseite auf dem Bildschirm 13 eines an den Ausgang 1 des Videorecorders 1 angeschlossenen Fernsehempfängers dargestellt werden soll. Dazu adressiert der Mikrocomputer 8 den Benutzerführungsinformationsspeicher 7 derart, daß die dort in einem ersten Speicherbereich 71 abgespeicherten Daten, die der gewünschten ersten Übersichtsseite entsprechen, ausgelesen und über den Textgenerator 11 und die Eintastschaltung 12 am Ausgang A des Videorecorders 1 zur Verfügung gestellt und dem Bildschirm 13 zugeführt werden.

Die auf dem Bildschirm dargestellte erste Übersichtsseite enthält eine erste Tabelle, in der u.a. der Vorgang "INSTALLATION" aufgelistet ist. Dieser Vorgang wird mittels der Cursortasten 22 des Fernbedienungsgebers 2 angewählt.

Der Mikrocomputer 8 adressiert in Ansprache auf diese Anwahl den Benutzerführungsinformationsspeicher 7 derart, daß die dort in einem zweiten Speicherbereich 72 abgespeicherten Daten, die einer zweiten Übersichtsseite entsprechen, ausgelesen und über den Textgenerator 11 und die Eintastschaltung 12 am Ausgang A des Videorecorders 1 zur Verfügung gestellt werden, von wo aus sie dem Bildschirm 13 des an den Videorecorder 1 angeschlossenen Fernsehempfängers zugeführt werden.

Die auf dem Bildschirm 13 dargestellte zweite Übersichtsseite enthält eine zweite Tabelle, in der u.a. der Vorgang "GRUNDEINSTELLUNG" aufgelistet ist. Dieser Vorgang wird mittels der Cursortasten 22 des Fernbedienungsgebers 2 angewählt.

Die im Rahmen dieser Grundeinstellung vorzunehmenden Eingaben sind abhängig von der jeweils am Empfangsort vorhandenen Satellitenempfangsanlage und unabhängig von den einzelnen, über die verschiedenen Satelliten empfangbaren Programmen.

Zunächst wird bei dieser Grundeinstellung der Benutzer durch den auf dem Bildschirm dargestellten Schriftzug "ANZAHL DER ANTENNENEINGÄNGE?" dazu aufgefordert, die bei der am Empfangsort verwendeten Satellitenempfangsanlage vorhandene Anzahl von Antenneneingängen anzugeben.

Ist bei der am Empfangsort verwendeten Satellitenempfangsanlage ein Polarizer bzw. Polarrotor vorhanden, dann ist an dieser Stelle der Wert "1" einzugeben, da bei einer derartigen Anlage nur ein Empfangskonverter (LNC) notwendig ist, dessen Ausgangssignal dem Antenneneingang zugeführt wird.

Ist bei der am Empfangsort verwendeten Satellitenempfangsanlage hingegen kein Polarrotor vorhanden, dann sind zwei verschiedene Empfangskonverter notwendig, von denen einer zur Verarbeitung horizontal polarisierter und der andere zur Verarbeitung vertikal polarisierter Signale vorgesehen ist. Die Ausgangssignale dieser Empfangskonverter werden zwei verschiedenen Antenneneingängen E 1 und E 2 des Videorecorders 1 zugeführt. Folglich ist bei einer derartigen Empfangsanlage für die Anzahl von Antenneneingängen der Wert "2" einzugeben.

Um dem Benutzer die Eingabe des erforderlichen Wertes zu erleichtern, werden gleichzeitig mit dem oben angegebenen Schriftzug "ANZAHL DER ANTENNENEINGÄNGE?", mittels dessen vom Benutzer die Eingabe der Anzahl der Antenneneingänge angefordert wird, die möglichen Antworten vorgegeben, d.h. die Zahlen "1" und "2" auf dem Bildschirm dargestellt. Die Eingabe erfolgt dadurch, daß mittels der Cursortasten 22 des Fernbedienungsgebers 2 die richtige Antwort angewählt und durch Betätigung einer Bestätigungstaste 23 auf dem Fernbedienungsgeber 2 im Empfangsanlagendatenspeicher 5 abgespeichert wird.

Im nächsten Schritt im Rahmen der Grundeinstellung wird der Benutzer durch den auf dem Bildschirm dargestellten Schriftzug "WIRD EINE SCHALTSPANNUNG BENÖTIGT?" dazu aufgefordert, anzugeben, ob bei der am Empfangsort verwendeten Satellitenempfangsanlage eine Schaltspannung von beispielsweise 12 V benötigt wird oder nicht. Eine derartige Schaltspannung ist dann notwendig, wenn neben dem Videorecorder 1 mindestens ein weiterer Satellitenempfänger an die Außeneinheit der Satelliten-Empfangsanlage angeschlossen ist und mittels eines Relais, welches von der genannten Schaltspannung angesteuert wird, der Videorecorder mit der Außeneinheit verbunden werden soll. Um dem Benutzer die Eingabe des erforderlichen Wertes zu erleichtern, werden auch hier gleichzeitig mit dem oben angegebenen Schriftzug "WIRD EINE SCHALTSPANNUNG BENÖTIGT?" die möglichen Anworten vorgegeben, d.h. die Schriftzüge "NEIN" und "12 V" auf dem Bildschirm dargestellt.

Die Eingabe erfolgt dadurch, daß mittels der Cursortasten 22 des Fernbedienungsgebers 2 die richtige Antwort angewählt und durch Betätigung der Bestätigungstaste 23 auf dem Fernbedienungsgeber 2 im Empfangsanlagendatenspeicher 5 abgespeichert wird.

Im nächsten Schritt im Rahmen der Grundeinstellung wird der Benutzer durch den auf dem Bildschirm dargestellten Schriftzug "IST EIN DESCRAMBLER ANGESCHLOSSEN?" dazu aufgefordert, anzugeben, ob an die am Empfangsort verwendete Satellitenempfangsanlage ein Descrambler zum Entschlüsseln von verschlüsselt übertragenen Fernsehsendungen angeschlossen ist oder nicht. Auch hier sind die möglichen Antworten "JA" und "NEIN" durch gleichzeitige Darstellung zusammen mit der oben angegebenen Aufforderung auf dem Bildschirm 13 vorgegeben. Die Eingabe erfolgt auch hier dadurch, daß mittels der Cursortasten 22 des Fernbedienungsgebers 2 die richtige Antwort angewählt und durch Betätigung der Bestätigungstaste 23 des Fernbedienungsgebers 2 im Empfangsanlagendatenspeicher 5 abgespeichert wird.

Im nächsten Schritt im Rahmen der Grundeinstellung wird der Benutzer durch den auf dem Bildschirm dargestellten Schriftzug "EMPFANGSKONVERTER-OSZILLATORFREQUENZ?" dazu aufgefordert, die bei der am Empfangsort verwendeten Satellitenempfangsanlage notwendige Empfangskonverter-Oszillatorfrequenz anzugeben. Auch hier sind die möglichen Antworten "10 GHz", "11 GHz", "11,45 GHz" durch gleichzeitige Darstellung mit der oben angegebenen Aufforderung auf dem Bildschirm 13 vorgegeben. Die Eingabe bzw. Abspeicherung im Empfangsanlagendatenspeicher 5 erfolgt auch hier durch Anwahl der richtigen Antwort mittels der Cursortasten 22 des Fernbedienungsgebers 2 und anschließende Bestätigung mittels der Bestätigungstaste 23.

Gemäß einer vorteilhaften Ausgestaltung der Erfindung ist es an dieser Stelle auch möglich, mittels alphanumerischer Tasten 24 des Fernbedienungsgebers 2 eine nicht vorgegebene Empfangskonverter-Oszillatorfrequenz einzugeben. Dies ist insbesonders dann von Bedeutung, wenn der Videorecorder 1 an eine neue Satellitenempfangsanlage bzw. einen neuen Empfangskonverter angeschlossen werden soll, welcher eine andere, nicht vorgegebene Oszillatorfrequenz benötigt.

Nach der vorstehend beschriebenen Grundeinstellung, die für alle empfangbaren Satelliten-Fernsehprogramme Gültigkeit hat, erfolgt eine Programmierung des Satellitensenderspeichers 4 mit vom Benutzer angewählten Satellitenfernsehprogrammen. Dies geschieht wie folgt:

Durch Betätigung der Informationstaste 21 auf dem Fernbedienungsgeber 2 wird dem Mikrocomputer 8 über den Fernbedienempfänger 3 mitgeteilt, daß die erste Übersichtsseite auf dem Bildschirm 13 dargestellt werden soll. Der Mikrocomputer 8 adressiert daraufhin den Benutzerführungsinformationsspeicher 7 derart, daß die dort im ersten Speicherbereich 71 abgespeicherten Daten, die der gewünschten ersten Übersichtsseite entsprechen, ausgelesen, über den Textgenerator 11 und die Eintastschaltung 12 am Ausgang A des Videorecorders 1 zur Verfügung gestellt und auf dem Bildschirm 13 dargestellt werden.

Aus der auf dem Bildschirm dargestellten ersten Übersichtsseite wird mittels der Cursortasten 22 des Fernbedienungsgebers 2 der Vorgang "INSTALLATION" angewählt. Der Mikrocomputer 8 adressiert in Ansprache auf diese Anwahl den Benutzerführungsinformationsspeicher 7 derart, daß die dort im zweiten Speicherbereich 72 abgespeicherten Daten, die der zweiten Übersichtsseite entsprechen, ausgelesen und über den Textgenerator 11 und die Eintastschaltung 12 am Ausgang A des Videorecorders 1 zur Verfügung gestellt werden, von wo aus sie dem Bildschirm 13 des an den Videorecorder 1 angeschlossenen Fernsehempfängers zugeführt werden.

In der auf dem Bildschirm 13 dargestellten Tabelle, die der zweiten Übersichtsseite entspricht, ist u.a. der Vorgang "SATELLITENAUSWAHL" aufgelistet. Dieser Vorgang wird mittels der Cursortasten 22 des Fernbedienungsgebers 2 angewählt.

Der Mikrocomputer 8 adressiert in Ansprache auf diese Anwahl den Satellitenparameterspeicher 6 derart, daß die dort in einem ersten Speicherbereich 61 abgespeicherten Daten ausgelesen und über den Textgenerator 11 und die Eintastschaltung 12 am Ausgang A des Videorecorders 1 zur Verfügung gestellt werden, von wo aus sie dem Bildschirm 13 zugeführt werden. Die im ersten Speicherbereich 61 des Satellitenparameterspeichers 6 abgespeicherten Daten enthalten eine Tabelle, in der die Namen sämtlicher Satelliten aufgelistet sind, deren einzelne Parameter bereits bei der Videorecorderherstellung in einem zweiten Speicherbereich 62 des Satellitenparameterspeichers 6 abgespeichert wurden. Gleichzeitig adressiert der Mikrocomputer 8 in Ansprache auf die genannte Anwahl den Benutzerführungsinformationsspeicher 7 derart, daß dort abgespeicherte Benutzerführungsinformationen, die eine Aufforderung zur Anwahl eines der in der Tabelle genannten Satellitennamen enthält, zusammen mit der genannten Tabelle auf dem Bildschirm 13 dargestellt werden.

Mittels der Cursortasten 22 des Fernbedienungsgebers 2 wird in der dargestellten Tabelle einer der Satellitennamen angewählt. Diese Anwahl wird durch Betätigung der Bestätigungstaste 23 des Fernbedienungsgebers 2 bestätigt. Daraufhin adressiert der Mikrocomputer 8 den Satellitenparameterspeicher 6 derart, daß sämtliche Parameter des angewählten Satelliten aus dem Satellitenparameterspeicher 6 ausgelesen und über den Textgenerator 11 und die Eintastschaltung 12 an den Ausgang A des Videorecorders 1 weitergeben werden. Von dort aus werden die genannten Parameter dem Bildschirm 13 des an den Videorecorder 1 angeschlossenen Fernsehempfängers zugeführt, wo sie in Tabellenform dargestellt werden. Die in Tabellenform dargestellten Daten bilden eine Übersicht über sämtliche vom angewählten Satelliten ausgestahlten Sender, wobei jedem Sender vom Mikrocomputer 8 automatisch eine noch nicht belegte Stationstastennummer zugeordet wird. Diese Stationstastennummer wird auf der genannten Übersicht ebenso angezeigt wie die Nummer des Satellitenkanals, in der das vom jeweiligen Sender ausgestrahlte Programm übertragen wird, die Senderbezeichnung, eine bevorzugte Seitennummer aus dem Fernsehtextangebot des jeweiligen Senders und der Satellitenname.

Aus der am Bildschirm 13 dargestellten Senderliste des angewählten Satelliten werden mittels des Fernbedienungsgebers 2 diejenigen Sender ausgewählt und bestätigt, die im Satellitensendespeicher 4 abgespeichert werden sollen. Bei dieser Auswahl kann bei Bedarf mittels der Bedieneinheit 2 jedem ausgewählten Sender eine andere Stationstastennummer und eine andere bevorzugte Seitennummer aus dem jeweiligen Fernsehtextangebot zugeordnet werden.

Ist die Auswahl der gewünschten Sender des ersten angewählten Satelliten getroffen, dann wird erneut die im ersten Speicherbereich 61 des Satellitenparameterspeichers 6 abgespeicherte "Satellitentabelle"aufgerufen, der Name des nächsten gewünschten Satelliten angewählt und die Parameter der gewünschten Sender dieses nächsten Satelliten in den Satellitensenderspeicher 4 übernommen, usw.

Sind die Parameter sämtlicher gewünschter Sender sämtlicher gewünschter Satelliten im Satellitensenderspeicher 4 abgespeichert, dann erfolgt in einem nächsten Schritt eine Feineinstellung der Parameter für jeden Satellitensender. Dies geschieht wie folgt:

Durch Betätigung der Informationstaste 21 auf dem Fernbedienungsgeber 2 wird dem Mikrocomputer 8 über den Fernbedienempfänger 3 mitgeteilt, daß die erste Übersichtsseite auf dem Bildschirm 13 dargestellt werden soll. Der Mikrocomputer 8 adressiert daraufhin den Benutzerführungsinformationsspeicher 7 derart, daß die dort im ersten Speicherbereich 71 abgespeicherten Daten, die der gewünschten ersten Übersichtsseite entsprechen, ausgelesen und über den Textgenerator 11 und die Eintastschaltung 12 an den Ausgang A des Videorecorders 1 weitergeleitet werden.

Aus der auf dem Bildschirm 13 dargestellten ersten Übersichtsseite wird mittels der Cursortasten 22 des Fernbedienungsgebers 2 der Vorgang "INSTALLATION" angewählt. Der Mikrocomputer 8 adressiert in Ansprache auf diese Anwahl den Benutzerführungsinformationsspeicher 7 derart, daß die dort im zweiten Speicherbereich 72 abgespeicherten Daten, die der zweiten Übersichtsseite entsprechen, ausgelesen und über den Textgenerator 11 und die Eintastschaltung 12 am Ausgang A des Videorecorders 1 zur Verfügung gestellt werden, von wo aus sie dem Bildschirm 13 des an den Videorecorder 1 angeschlossenen Fernsehempfängers zugeführt werden.

In der auf dem Bildschirm dargestellten Tabelle, die der zweiten Übersichtsseite entspricht, ist u.a. der Vorgang "SATELLITENSENDERTABELLENAUFLISTUNG" aufgelistet. Dieser Vorgang wird mittels der Cursortasten 22 des Fernbedienungsgebers 2 angewählt.

Der Mikrocomputer 8 adressiert in Ansprache auf diese Anwahl den Satellitensenderspeicher 4 derart, daß die dort abgespeicherte Tabelle, die die Parameter der ausgewählten Sender der ausgewählten Satelliten enthält, auf dem Bildschirm 13 des an den Videorecorder 1 angeschlossenen Fernsehempfängers dargestellt wird. In dieser Tabelle wird mittels der Cursortasten 22 des Fernbedienungsgebers 2 eine gewünschte Sendung angewählt und durch Betätigung der Bestätigungstaste 23 bestätigt.

Daraufhin schaltet der Mikrocomputer 8 den Satellitentuner 9 auf die gewünschte Sendung um. Das Ausgangssignal des Satellitentuners 9 wird über den Tuner und den ZF-Teil der Videorecorderschaltung 10 der Eintastschaltung 12 zugeführt. In dieser Eintastschaltung 12 werden zur Feineinstellung Benutzerführungsinformationen in das vom Satellitentuner 9 abgeleitete Bild eingeblendet. Dies geschieht dadurch, daß der Mikrocomputer 8 den Benutzerführungsinformationsspeicher 7 derart adressiert, daß die bei der Feineinstellung notwendigen Benutzerführungsinformationen, die im Speicherbereich 73 des Benutzerführungsinformationsspeichers 7 abgespeichert sind, ausgelesen und der Eintastschaltung 12 über den Textgenerator 11 zugeführt werden.

Bei dieser Feineinstellung wird beispielsweise ein Feldstärkebalken, dessen Länge der Empfangsfeldstärke entspricht, am Bildschirm 13 eingeblendet und der Benutzer im Klartext dazu aufgefordert, die Satellitenantenne derart auszurichten, daß der Feldstärkebalken sein Maximum erreicht. Weiterhin kann bei dieser Feineinstellung der Videofrequenzhub, die ZF-Bandbreite, der Polarisationsdrehwinkel für einen angeschlossenen Polarrotor, usw. umgeschaltet bzw. feineingestellt werden, sowie eine Tonträgerwahl erfolgen.

Auch bei dieser Feineinstellung erfolgt eine besonders vorteilhafte Benutzerführung dadurch, daß am Bildschirm 13 nicht nur angegeben wird, welche Eingaben vom Benutzer gerade zu tätigen sind, sondern insbesondere auch dadurch, daß explizit angegeben ist, in welcher Form der Benutzer auf die jeweilige Anforderung reagieren muß und in welchem Format er jeweils die gewüschten Daten eingeben muß. Gegebenenfalls werden auch hier die möglichen Antworten auf eine Anforderung am Bildschirm 13 aufgelistet, so daß eine der dargestellten Antworten mittels der Cursortasten 22 angewählt werden kann.

Weiterhin werden im Rahmen dieser Feineinstellung auch die im Satellitensenderspeicher 4 abgespeicherten Satellitenparameter der gewünschten Sendung auf dem Bildschirm 13 dargestellt, u.a. die Satellitenempfangsfrequenz. Dies ermöglicht es dem Benutzer dann, wenn neue Programme von einem Satelliten abgestrahlt werden oder gar neue Satelliten hinzukommen, die zugehörige Satellitenempfangsfrequenz, welche beispielsweise aus einer Zeitschrift bekannt ist, mittels der alphanumerischen Tasten 24 des Fernbedienungsgebers 2 direkt einzugeben. Der Mikrocomputer 8 berechnet daraus anhand eines vorgebenen Rechenprogrammes diejenigen Daten, die im Satellitenempfänger zum Empfang der neuen Programme notwendig sind.

Bei dem in der Figur dargestellten Videorecorder sind der Satellitensenderspeicher 4, der Empfangsanlagendatenspeicher 5, der Satellitenparameterspeicher 6 und der Benutzerführungsinformationsspeicher 7 aus Gründen der Anschaulichkeit als getrennte Bauelemente gezeigt. In der Praxis ist es selbstverständlich auch möglich, zwei oder mehr dieser Speicher zu einem Bauelement zusammenzufassen.

## Patentansprüche

1. Vorrichtung zur Senderprogrammierung eines Satellitenempfängers mit
- einer Bedieneinheit (2),
- einem Satellitentuner,
- einer Steuerschaltung (8), und
- einem Satellitensenderspeicher (4)
**dadurch gekennzeichnet**, daß sie weiterhin erste Speichermittel (7) zur Abspeicherung von Benutzerführungsinformationen und zweite Speichermittel (6) zur werksseitigen Abspeicherung von Satellitenparametern für eine Vielzahl von Satelliten aufweist, wobei die Steuerschaltung (8) in Ansprache auf mittels der Bedieneinheit (2) eingegebene Steuerbefehle die zweiten Speichermittel (6) derart adressiert, daß die einzelnen Satellitenparameter sämtlicher Sender eines mittels der Bedieneinheit (2) ausgewählten Satelliten auf einem Bildschirm (13) dargestellt werden, und wobei die Satellitenparameter eines Senders des ausgewählten Satelliten mittels der Bedieneinheit (2) angewählt werden und bei Betätigung einer Übernahmetaste (23) der Bedieneinheit (2) in den Satellitensenderspeicher (4) übernommen werden.

2. Vorrichtung nach Anspruch 1,
**dadurch gekennzeichnet**, daß die Steuerschaltung (8) jedem Sender des ausgewählten Satelliten automatisch eine noch nicht vergebene Stationstastennummer zuordnet.

3. Vorrichtung nach Anspruch 2,
**dadurch gekennzeichnet**, daß die von der Steuerschaltung (8) vorgenommene Stationstastennummerzuordnung mittels der Bedieneinheit (2) veränderbar ist.

4. Vorrichtung nach einem oder mehreren der vorhergehenden Ansprüche,
**dadurch gekennzeichnet**, daß sie Speichermittel (5) zur Abspeicherung von Empfangsanlagendaten aufweist.

5. Vorrichtung nach einem oder mehreren der vorhergehenden Ansprüche,
**dadurch gekennzeichnet**, daß die in den ersten Speichermitteln (7) abgespeicherten Benutzerführungsinformationen Aufforderungsdaten und Antwortdaten enthalten, die Antwortdaten verschiedene Antwortmöglichkeiten beschreiben, die Aufforderungsdaten und die Antwortdaten gleichzeitig auf dem Bildschirm (13) dargstellt werden, und mittels der Bedieneinheit (2) jede der verschiedenen Antwortmöglichkeiten anwählbar ist.

6. Vorrichtung nach Anspruch 5,
**dadurch gekennzeichnet**, daß mittels der Bedieneinheit (2) Antwortdaten eingebbar sind, die nicht durch die Benutzerführungsinformationen vorgegeben sind.

7. Vorrichtung nach Anspruch 6,
**dadurch gekennzeichnet**, daß mittels der Bedieneinheit (2) die Empfangskonverter-Oszillatorfrequenz eingebbar ist.

8. Vorrichtung nach einem oder mehreren der vorhergehenden Ansprüche,
**dadurch gekennzeichnet**, daß die zweiten Speichermittel (6) einen ersten Speicherbereich (61) aufweisen, in welchem Daten abgespeichert sind, die einer Satellitennamen-Tabelle entsprechen.

9. Vorrichtung nach Anspruch 8,
**dadurch gekennzeichnet**, daß die zweiten Speichermittel (6) einen zweiten Speicherbereich (62) aufweisen, in welchem Daten abgespeichert sind, die den Satellitenparametern sämtlicher Sender entsprechen, die von den in der Satellitennamen-Tabelle genannten Satelliten abgestrahlt werden.

10. Vorrichtung nach einem oder mehreren der vorhergehenden Ansprüche,
**dadurch gekennzeichnet**, daß mittels der Bedieneinheit (2) die einem Satelliten zugeordnete Satelliten-Empfangsfrequenz direkt eingebbar ist und der Mikrocomputer (8) daraus anhand eines vorgegebenen Rechenprogrammes die zum Empfang von Programmen des Satelliten notwendigen weiteren Satellitenparameter berechnet.

## Revendications

1. Dispositif de programmation des canaux d'un récepteur dpar satellite comportant :
- une unité de manipulation (2),
- un tuner de satellite,
- un circuit de commande (8), et
- une mémoire (4) d'émetteurs par satellite,
caractérisé en ce qu'il comporte en outre des premiers moyens de mémoire (7) pour mémoriser des informations de guidage de l'utilisateur et des seconds moyens de mémoire (6) pour mémoriser en usine, des paramètres de satellites pour une multiplicité de satellites, le circuit de commande adressant les seconds moyens de mémoire (6) en réponse à des instructions de commande introduites au moyen de l'unité de manipulation (2), de telle sorte que les différents parametres de satellites de tous les émetteurs d'un satellite sélectionné au moyen de l'unité de manipulation (2) sont représentés sur un écran (13), alors que les paramètres de satellite d'un émetteur sélectionné sont sélectionnés au moyen de l'unité de manipulation (2) et, lors de l'actionnement d'une touche de transfert (23) de l'unité de manipulation (2), sont transférés dans la mémoire (4) des émetteurs par satellite.

2. Dispositif selon la revendication 1, caractérisé en ce que le circuit de commande (8) associe automatiquement un numéro de touche de station non encore affecté, à chaque émetteur du satellite sélectionné.

3. Dispositif selon la revendication 2, caractérisé en ce que l'assocation de numéros de touches de stations, exécutée par le circuit de commande (8), peut être modifiée au moyen de l'unité de manipulation (2).

4. Dispositif selon une ou plusieurs des revendications précédentes, caractérisé en ce qu'il possède des moyens de mémoire (5) servant à mémoriser des données d'installations de réception.

5. Dispositif selon une ou plusieurs des revendications précédentes, caractérisé en ce que les informations de guidage de l'utilisateur, qui sont mémorisées dans les premiers moyens de mémoire (7), contiennent des données de demande et des données de réponse, que les données de réponse décrivent différentes possibilités de réponse, que les données de demande et les donnéesde réponse sont représentées simultanément sur l'écran (13) et que chacune des différentes possibilités de réponse peut être sélectionnée au moyen de l'unité de manipulation (2).

6. Dispositif selon la revendication 5, caractérisé en ce qu'au moyen de l'unité de manipulation (2) on peut introduire des données de réponse, qui ne sont pas prédéterminées par les informations de guidage de l'utilisateur.

7. Dispositif selon la revendication 6, caractérisé en ce qu'à l'aide de l'unité de manipulation (2), on peut introduire la fréquence de l'oscillateur du convertisseur de réception.

8. Dispositif selon une ou plusieurs des revendications précédentes, caractérisé en ce que les seconds moyens de mémoire (6) possèdent une première zone de mémoire (61), dans laquelle sont mémorisées des données qui correspondent à un tableau de noms de satellites.

9. Dispositif selon la revendication 8, caractérisé en ce que les seconds moyens de mémoire (6) possèdent une seconde zone de mémoire (62), dans laquelle sont mémorisées des données, qui correspondent aux paramètres de tous les émetteurs, qui sont émis par les satellites indiqués dans le tableau de noms de satellites.

10. Dispositif selon une ou plusieurs des revendications précédentes, caractérisé en ce qu'à l'aide de l'unité de manipulation (2), la fréquence de réception, qui est associée à un satellite, peut être introduite directement et le micro-ordinateur (8) calcule, à partir de là et sur la base d'un programme de calcul prédéterminé, les autres paramètres du satellite, qui sont nécessaires pour la réception de programmes du satellite.

## Claims

1. Device for programming the channels of a satellite receiver, having
- an operator-control unit (2),
- a satellite tuner,
- a control circuit (8), and
- a satellite transmitter memory (4),
characterized in that it also has first memory means (7) for the storing of user-prompting information and second memory means (6) for the storing at the factory of satellite parameters for a multiplicity of satellites, the control circuit (8) responding to control commands entered by means of the operator-control unit (2) by addressing the second memory means (6) in such a way that the individual satellite parameters of all the transmitters of a satellite selected by means of the operator-control unit (2) are displayed on a screen (13), and the satellite parameters of a transmitter of the selected satellite being selected by means of the operator-control unit (2) and taken over into the satellite transmitter memory (4) upon actuation of a take-over button (23) of the operator-control unit (2).

2. Device according to Claim 1, characterized in that the control circuit (8) automatically assigns to each transmitter of the selected satellite a not yet allocated station button number.

3. Device according to Claim 2, characterized in that the station button number assignment performed by the control circuit (8) can be changed by means of the operator-control unit (2).

4. Device according to one or more of the preceding claims, characterized in that it has memory means (5) for the storing of receiving system data.

5. Device according to one or more of the preceding claims, characterized in that the user-prompting information stored in the first memory means (7) includes request data and answer data, which answer data describe various possible answers, the request data and the answer data are displayed at the same time on the screen (13), and each of the various possible answers can be selected by means of the operator-control unit (2).

6. Device according to Claim 5, characterized in that answer data which are not given by the user-prompting information can be entered by means of the operator-control unit (2).

7. Device according to Claim 6, characterized in that the receiving converter oscillator frequency can be entered by means of the operator-control unit (2).

8. Device according to one or more of the preceding claims, characterized in that the second memory means (6) have a first memory area (61), in which data which correspond to a satellite name table are stored.

9. Device according to Claim 8, characterized in that the second memory means (6) have a second memory area (62), in which data which correspond to the satellite parameters of all the transmitters which broadcast from the satellites given in the satellite name table are stored.

10. Device according to one or more of the preceding claims, characterized in that the satellite receiving frequency assigned to a satellite can be entered directly by means of the operator-control unit (2), and the microcomputer (8) calculates from this on the basis of a predetermined computing program the further satellite parameters necessary for the reception of channels of the satellite.
